(19) Europäisches Patentamt / European Patent Office / Office européen des brevets

(11) **EP 4 038 318 B1**

(12) **EUROPEAN PATENT SPECIFICATION**

(45) Date of publication and mention
of the grant of the patent:
**25.02.2026 Bulletin 2026/09**

(21) Application number: **19947850.4**

(22) Date of filing: **01.10.2019**

(51) International Patent Classification (IPC):
**F23N 5/00** *(2006.01)*     **F23N 5/18** *(2006.01)*
**F01N 11/00** *(2006.01)*

(52) Cooperative Patent Classification (CPC):
**F01N 11/00; F23N 1/022; F23N 5/003; F23N 5/18;**
F01N 2550/00; F23G 2207/104; F23G 2207/105;
F23G 2207/106; F23N 2005/181; F23N 2005/185;
F23N 2221/10; F23N 2241/12; F23N 2241/18;
F23N 2900/05001; F23N 2900/05002;     (Cont.)

(86) International application number:
**PCT/RU2019/000697**

(87) International publication number:
**WO 2021/066669 (08.04.2021 Gazette 2021/14)**

(54) **SYSTEMS, METHODS, AND APPARATUS TO MEASURE FLARE BURNER EMISSIONS**

SYSTEME, VERFAHREN UND VORRICHTUNG ZUR MESSUNG DER EMISSIONEN EINES
FACKELBRENNERS

SYSTÈMES, PROCÉDÉS ET APPAREIL DE MESURE D'ÉMISSIONS DE BRÛLEUR DE TORCHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.08.2022 Bulletin 2022/32**

(73) Proprietors:
• **Schlumberger Technology B.V.**
**2514 JG The Hague (NL)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**
• **Services Pétroliers Schlumberger**
**75007 Paris (FR)**
Designated Contracting States:
**FR**

(72) Inventors:
• **SERDYUK, Konstantin Mikhailovich**
**Berdsk, 633000 (RU)**
• **MIKHALEV, Grigory Yurievich**
**Novosibirsk, 630090 (RU)**
• **MOISEEV, Aleksander Yuryevich**
**Novosibirsk, 630090 (RU)**
• **SINGIN, Vitaly Valeryevich**
**Novosibirsk, 630078 (RU)**
• **KORNEEV, Vadim Yuryevich**
**Novosibirsk, 630117 (RU)**
• **SERDYUK, Dilara Ildusovna**
**Berdsk, 633000 (RU)**
• **SKACHKOV, Roman Alexandrovich**
**Novosibirsk, 630060 (RU)**

(74) Representative: **Schlumberger Intellectual
Property Department
Parkstraat 83
2514 JG Den Haag (NL)**

(56) References cited:
EP-A2- 2 309 186     WO-A1-2011/100225
WO-A1-2017/058832     WO-A1-2017/058832
RU-C1- 2 539 222     US-A1- 2015 167 972
US-A1- 2015 167 972

(52) Cooperative Patent Classification (CPC): (Cont.)
F23N 2900/05003; Y02T 10/40

## Description

## BACKGROUND

This disclosure relates generally to pollution monitoring and, more particularly, to systems, methods, and apparatus to measure flare burner emissions.

## Description of the Related Art

In the oil and gas industry, gas flaring or liquid flaring using flare burners remains an economical approach for handling waste fluids produced in exploration wells or during well testing operations. Unburned liquid fallout and gaseous emissions are two kinds of environmental pollution linked to flaring operations. Measurement of such pollution can be used to evaluate an efficiency or a performance of the flare burners. WO 2017/058832 describes a method for monitoring and controlling burning operations including igniting oil or gas with a burner during a burning operation and monitoring the burning operation with a camera by acquiring image data for a flame of the burner and analyzing the acquired image data to detect image features indicative of combustion of the oil or gas via the burner. US 2015/167972 describes A method for real-time burner monitoring and control of a flare system, including analyzing a flare gas and/or flare exhaust gas by one or more analytical techniques and determining the flare gas and/or flare exhaust gas composition. The method may also include an ash particle monitoring system. The method further includes an analytical control unit for real-time adjustment of process conditions.

## SUMMARY

Certain aspects of some embodiments of the invention disclosed herein are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.
The present invention resides in an apparatus as defined in claim 1, a method as defined in claim 7 and an non-transitory computer readable storage medium as defined in claim 14.

## BRIEF DESCRIPTION OF THE DRAWINGS

FIG. 1 is a schematic illustration of an example emission controller apparatus monitoring an example flare burner in an example measurement environment.

FIG. 2 is a schematic illustration of an example emission controller system monitoring the example flare burner of FIG. 1.

FIG. 3 is a block diagram of an example implementation of the example emission controller system including the example emission controller apparatus of FIG. 1.

FIG. 4 is a table depicting example emission data determined by the example emission controller apparatus of FIGS. 1 and 3.

FIGS. 5-6 are flowcharts representative of example machine readable instructions which may be executed to implement the example emission controller apparatus of FIGS. 1 and 3.

FIG. 7 is a block diagram of an example processing platform structured to execute the instructions of FIGS. 4-5 to implement the example emission controller apparatus of FIGS. 1 and 3.

The figures are not to scale. Wherever possible, the same reference numbers will be used throughout the drawing(s) and accompanying written description to refer to the same or like parts. Connecting lines or connectors shown in the various figures presented are intended to represent example functional relationships and/or physical or logical couplings between the various elements.
Descriptors "first," "second," "third," etc. are used herein when identifying multiple elements or components which may be referred to separately. Unless otherwise specified or understood based on their context of use, such descriptors are not intended to impute any meaning of priority or ordering in time but merely as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

## DETAILED DESCRIPTION

It is to be understood that the present disclosure provides many different embodiments of the invention or examples, for implementing different features of various embodiments of the invention. Specific examples of components and arrangements are described below for purposes of explanation and to simplify the present disclosure. These are, of course, merely examples and are not intended to be limiting.
When introducing elements of various embodiments of the invention, the articles "a," "an," "the," and "said" are intended to mean that there are one or more of the elements. The terms "comprising," "including," and "having" are intended to be inclusive and mean that there may be additional elements other than the listed elements. Moreover, any use of "top," "bottom," "above," "below," other directional terms, and variations of these terms is made for convenience, but does not mandate any particular orientation of the components.

In the oil and gas industry, there have been many advancements in gas flare equipment for gas combustion and, in particular, multiphase flare equipment for combustion of fluid flows including gas condensate, natural gas, oil, and/or water. However, evaluating performance of such flare equipment or flare burners remains difficult. In prior implementations, well test operators used indirect visual evidence such as an absence of soot in the flame and absence of black smoke in the flue gases plume, which are indicators of proper fuel/oxygen ratio in the flaring mixture. As used herein, a flue gas can correspond to gas exiting to the atmosphere via a flue (e.g., a channel, a pipe, etc.) of the flare burner. For example, the flue gas can correspond to combustion exhaust gas produced by the flare burner. Additionally or alternatively, well test operators have used other indirect visual evidence such as observing relatively small amounts of oily film on a surface (e.g., a ground surface, a water surface, etc.), which is an indicator of low fallout of oil droplets.

Conventional tools for combustion efficiency monitoring are not applicable for open-atmosphere flare burners. For open-air flare burners, such as gas flare and liquid flare equipment, flare burning operations are complicated by external factors. For example, the content of waste fluid is unpredictable for some wells, and the completeness of fuel combustion depends on a variety of factors, such as the burner design, the fuel droplet size entering the flame, the fuel flow rate, and the atmospheric conditions for the flame (e.g., wind direction, wind strength, etc.). As a result, a configuration, a parameter, an operating condition, etc., of a flare burner may need to be adjusted for each flare burning operation to attempt increasing the combustion efficiency.

Pollution from conventional flare burners exists in several forms. A first form of flare burner pollution corresponds to hazardous gaseous emissions (e.g., carbon monoxide, nitrogen oxides (NOx) gases, volatile unburned hydrocarbon $C_xH_y$ gases, sulfur oxides, etc.), which are the gas substances generated from imperfect combustion of hydrocarbon gas or crude oil. A second form of flare burner pollution is referred to as fallout and corresponds to droplets (e.g., fallout droplets, fluid deposits, fuel droplets, liquid droplets, etc.) that fall beyond the flame of the liquid or multiphase flare burner and remain unburned or not completely evaporated.

Examples disclosed herein include an example emission controller apparatus to measure gas emissions from a flare burner while burning waste fluid flows (e.g., gas flows, liquid flows, etc.) to improve and/or otherwise optimize a combustion efficiency of the flare burner. In some disclosed examples, the emission controller apparatus monitors a flare burner by feeding a hydrocarbon-containing fuel having a known carbon content at a known flow rate. In some examples, the flare burner is a crude oil burner while, in other examples, the flare burner is a gas flare fed with a measured and/or otherwise known mass flow rate of hydrocarbon-containing fluid with a measured water cut and carbon content (e.g., content percentage by weight) of the hydrocarbon portion of the fluid. The flare burner creates a flaring flame and generates corresponding emission gases by atomizing the hydrocarbon fuel and mixing with ambient air. In some examples, mast-supported probing tubes with inlet openings are disposed in a flue gases plume to measure the emission gases to determine a composition of a gas mixture produced by the flame. In such examples, the probing tubes can be placed at a distance away from the flame (e.g., several meters away from the flame) where an entirety of the chemical reactions are completed (e.g., completed as indicated by a temperature of combustion products being less than 300° C). In some examples, a sampling tube is connected to the probing tubes to take samples of the gas mixture and provide the samples to the emission controller apparatus. The emission controller apparatus can measure gas emission concentrations and calculate emission flow rates for detectible gas components to determine the composition of the gas mixture.

In some examples, the emission controller apparatus monitors a flare burner fed with (1) a fuel having an unknown composition at a first known flow rate and (2) a marker or reference inert gas (e.g., argon gas) having a known composition at a second known flow rate. In some examples, the mast-supported probing tubes are disposed in the flue gases plume generated by the flare burner to determine a composition of a gas mixture produced by the flame. In some examples, the emission controller apparatus obtains samples of the gas mixture via a sampling tube coupled to the probing tubes. The emission controller apparatus can measure gas emission concentrations of the flared fuel and the reference gas. The emission controller apparatus can calculate emission flow rates for detectible gas components based on the known flow rate of the reference gas to determine the composition of the gas mixture.

In some examples, the emission controller apparatus generates a recommendation based on the composition of the gas mixture to adjust a parameter of the flare burner to reduce emission pollution. In some examples, the emission controller apparatus generates and transmits a command based on the composition to adjust and/or otherwise control the flare burner to reduce emission pollution during a continuous mode operation of the flare burner.

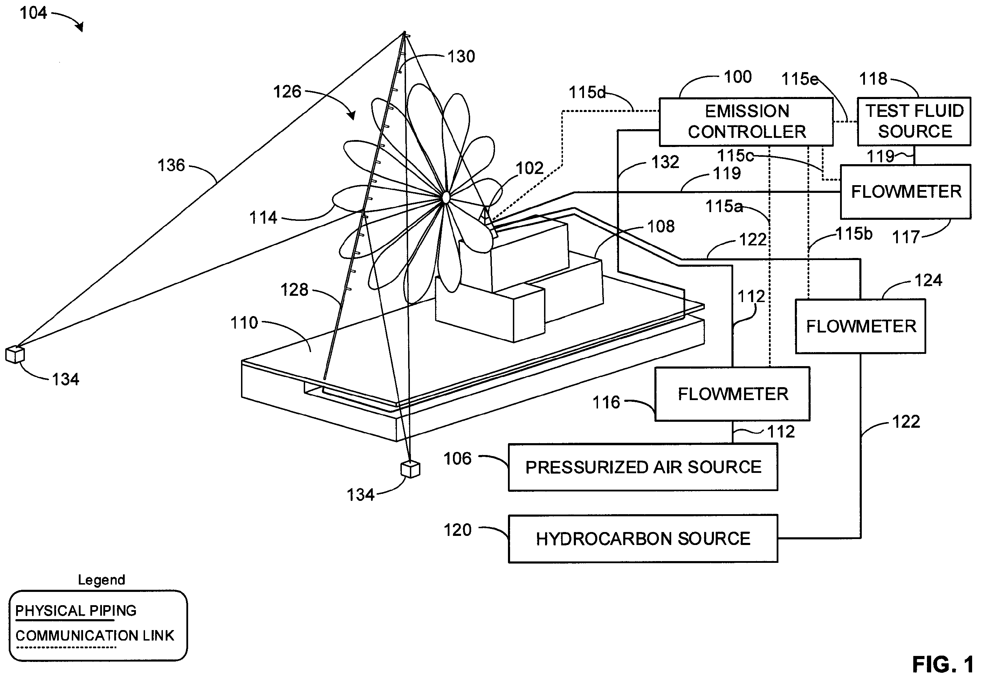

FIG. 1 is a schematic illustration of an example emission controller 100 monitoring an example flare burner 102 in an example measurement environment 104. In FIG. 1, the emission controller 100 monitors an operation of the flare burner 102 by measuring gas emissions in the measurement environment 104. In some examples, the flare burner 102 operates in a waste-burning mode (e.g., the flare burner 102 performing a waste-burning operation) corresponding to a burning of waste fluids produced in exploration wells or during well testing operations. In FIG. 1, the emission controller 100 measures emissions during a test operation of the flare burner 102 to estimate and/or otherwise determine expected emissions during a waste-burning operation using a current or instant configuration of the flare burner 102.

In the illustrated example of FIG. 1, the flare burner 102 is a type commonly used in the oil and gas industry. For example, the flare burner 102 can include an atomizing head including twelve nozzles and two pilot burners. Oil or another type of hydrocarbon source can be atomized into small droplets by means of a pressurized air source 106. Combustion of the small droplets is initiated when the two pilot burners are ignited. The flare burner 102 of FIG. 1 is placed on a pedestal platform 108 (e.g., a 5-meter-high pedestal platform) to prevent flame interaction with a ground surface 110 and to provide proper atmosphere air aspiration. The flare burner 102 of FIG. 1 is inclined to the horizon at a 20-degree angle. Alternatively, any other configuration and/or type of gas flare burner, liquid flare burner, or multiphase flare burner can be used.

In FIG. 1, the flare burner 102 is in fluid communication with the pressurized air source 106 via a first example supply line 112 (e.g., a feed line, a fluid supply line, etc.). In some examples, the flare burner 102 blows compressed air from the pressurized air source 106 to assist the oil atomization inside the burner nozzles included in the flare burner 102. In some examples, the flare burner 102 blows compressed air from the pressurized air source 106 to expel atomized fluid droplets from the burner nozzles, spread the expelled droplets into turbulent jets, and induce ambient air entrainment and mixing into an example exhaust or flame plume 114.

In FIG. 1, the emission controller 100 measures a flow rate of the compressed air from the pressurized air source 106 via a first example flowmeter 116. In FIG. 1, the first flowmeter 116 is an air flowmeter capable of measuring a flow rate of the fluid flowing through the first supply line 112. For example, the first flowmeter 116 can transmit measurement data including a flow rate of the air flowing through the first supply line 112 to the emission controller 100 for processing. Alternatively, the first flowmeter 116 may be any other type of flowmeter, such as a multiphase flowmeter. In FIG. 1, the first supply line 112 corresponds physical piping.

In the illustrated example of FIG. 1, the flare burner 102 is supplied with a reference gas from an example test fluid source 118 via a third example supply line 119. For example, the flare burner 102 can obtain an inert marker gas such as argon gas from the test fluid source 118. Alternatively, any other marker or reference gas may be obtained from the test fluid source 118. Alternatively, the inert marker gas may be injected and/or otherwise inserted into the first supply line 112 at a position downstream of the first flowmeter 116 and upstream of the flare burner 102. Alternatively, the inert marker gas may be injected and/or otherwise inserted into a second example supply line 122 at a position downstream of a second example flowmeter 124 and upstream of the flare burner 102. Alternatively, the flare burner 102 may not be in fluid communication with the test fluid source 118. For example, the flare burner 102 may not obtain the reference gas from the test fluid source 118, the first supply line 112, or the second supply line 122.

In the illustrated example of FIG. 1, the flare burner 102 is in fluid communication with an example hydrocarbon source 120 via the second supply line 122. In FIG. 1, the second supply line 122 corresponds physical piping. In some examples, the hydrocarbon source 120 provides a fluid such as natural gas, methane, or any other gas produced from an exploration well or other hydrocarbon production source. In some examples, the hydrocarbon source 120 provides a fluid such as oil or any other liquid produced from an exploration well or other hydrocarbon production source.

In FIG. 1, the emission controller 100 measures a fluid flowing through the second supply line 122 via the second flowmeter 124. For example, the emission controller 100 can obtain measurement data from the second flowmeter. In FIG. 1, the second flowmeter 124 is a gas flowmeter, a liquid flowmeter, or a multiphase flowmeter that can measure a mass flow rate of the hydrocarbon component of the fluid flowing through the second supply line 122. For example, the second flowmeter 124 can transmit measurement data including a mass flow rate of the hydrocarbon fluid flowing through the second supply line 122 to the emission controller 100 for processing. In some examples, the emission controller 100 measures a reference gas flowing through the third supply line 119 via a third example flowmeter 117. In FIG. 1, the third supply line 119 corresponds physical piping. In FIG. 1, the third flowmeter 117 is a gas flowmeter that can transmit measurement data including a flow rate of the reference gas flowing through the third supply line 119 to the emission controller 100 for processing. Alternatively, the third flowmeter 117 may be any other type of flowmeter (e.g., a multiphase flowmeter). In FIG. 1, flow rates of the fluids from the pressurized air source 106, the test fluid source 118, and/or the hydrocarbon source 120 are adjusted or controlled by the emission controller 100.

In FIG. 1, the emission controller 100 is communicatively coupled to computing devices of the measurement environment 104 via example communication links 115a-e. The communication links 115a-e facilitate data communication from first device(s) to second computing device(s). In some examples, one or more of the communication links 115a-e are wired connections. Additionally or alternatively, one or more of the communication links 115a-e may be wireless connections. In FIG. 1, the emission controller 100 is communicatively coupled and/or otherwise in communication with the first flowmeter 116 via a first example communication link 115a. In FIG. 1, the emission controller 100 is communicatively coupled and/or otherwise in communication with the second flowmeter 124 via a second example communication link 115b. In FIG. 1, the emission controller 100 is communicatively coupled and/or otherwise in communication with the third flowmeter 117 via a third example communication link 115c. In FIG. 1, the emission controller 100 is communicatively coupled and/or otherwise in communication with the flare burner 102 via a fourth example communication link 115d. In FIG. 1, the emission controller 100 is communicatively coupled and/or otherwise in communication with the test fluid source 118 (e.g., a computing device associated with the test fluid source 118) via a fifth example communication link 115e. For example, the emission controller 100 can obtain data, generate commands, and/or otherwise invoke a controlled or intended operation of at least one of the first flowmeter 116, the second flowmeter 124, the third flowmeter 117, the flare burner 102, or the test fluid source 118 via a respective one of the communication links 115a-e.

In FIG. 1, the emission controller 100 measures a composition of a gas mixture (e.g., a flue gas mixture) 126 proximate the flame plume 114 by disposing a mast 128 including a plurality of probes 130 proximate the flame plume 114. For example, the probes 130 can be disposed proximate the flue gas mixture 126 to obtain one or more samples of the flue gas mixture 126. The probes 130 of FIG. 1 are gas intake probes or probing tubes operative to obtain samples of the flue gas mixture 126 and transmit the samples to the emission controller 100 via a sampling tube 132 included in the mast 128. In FIG. 1, the sampling tube 132 corresponds to physical piping. For example, the sampling tube 132 can be housed and/or otherwise included in a physical pipe, conduit, etc. The flue gas mixture 126 of FIG. 1 includes one or more gas components such as carbon monoxide (CO), carbon dioxide ($CO_2$), nitrogen oxides NOx gases, sulfur dioxide ($SO_2$), etc., based on the flare burner 102 combusting the hydrocarbon source 120.

In the illustrated example of FIG. 1, the mast 128 is a frame support structure and is disposed in the measurement environment 104 using two movable supports 134 and corresponding inclination adjusting cables 136. For example, the movable supports 134 can be cinder blocks or other types of support structures. In FIG. 1, the mast 128 includes fifteen probes 130. Alternatively, the mast 128 may include fewer or more than fifteen probes 130. For example, the probes 130 can be equipped with inlet nipples or openings to obtain gas samples. In some examples, one or more of the probes 130 can be plugged and/or otherwise disabled.

In operation, the emission controller 100 of FIG. 1 directs the flare burner 102 to operate in a continuous mode operation. For example, the flare burner 102 can combust and expel the hydrocarbon source 120 via assistance from the pressurized air source 106. The emission controller 100 can collect (e.g., iteratively collect) samples of the flue gas mixture 126 via the sampling tube 132 coupled to one or more of the probes 130 included in the mast 128.

In some examples, where the carbon weight fraction of hydrocarbon fluid of the hydrocarbon source 120 is known, measured, or estimated, the emission controller 100 determines flow rates of flue gas components included in the flue gas mixture 126 based on (1) concentrations of gas components included in the flue gas mixture 126 and (2) a mass flow rate of the hydrocarbon source 120 flowing in the second supply line 122. In other examples, the emission controller 100 can determine flow rates of flue gas components included in the flue gas mixture 126 based on (1) concentrations of gas components included in the flue gas mixture 126 and (2) a flow rate of the test fluid source 118 in the third supply line 119. In response to calculating the flow rates, the emission controller 100 can generate a recommendation to direct an adjustment of the flare burner 102 to improve and/or otherwise optimize a combustion efficiency of the flare burner 102.

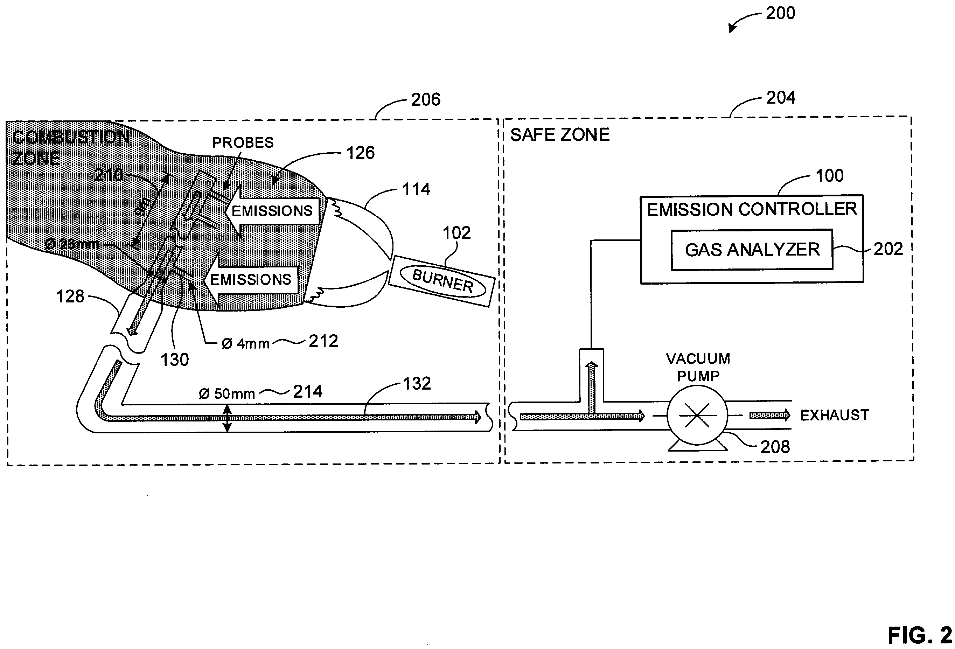

FIG. 2 is a schematic illustration of an example emission controller system 200 monitoring the flare burner 102 of FIG. 1. In FIG. 2, the emission controller system 200 includes the emission controller 100 and an example gas analyzer 202 disposed in an example safe zone 204. The gas analyzer 202 obtains samples of the flue gas mixture 126 proximate the exhaust plume 114 generated by the flare burner 102 in an example combustion zone 206. The gas analyzer 202 of FIG. 2 is a continuous gas analyzer operative to calculate gas component concentrations of a gas sample. Alternatively, any other gas analyzer may be used. The gas analyzer 202 obtains the samples from one or more of the probes 130 via the sampling tube 132. For example, the emission controller 100 can operate an example vacuum pump 208 in the safe zone 204 to pull in samples of the flue gas mixture 126 through one or more of the probes 130.

In the illustrated example of FIG. 2, a distance 210 between (1) a first one of the probes 130 disposed at a top portion of the mast 128 of FIG. 1 and (2) a second one of the probes 130 disposed at a bottom portion of the mast 128 is nine meters. Alternatively, the distance 210 may be different. In FIG. 2, a first diameter 212 of each of the probes 130 is four millimeters. Alternatively, the first diameter 212 may be different. Alternatively, the probes 130 may have different diameters from each other. In FIG. 2, a second diameter 214 of the sampling tube 132 is fifty millimeters. Alternatively, the second diameter 214 may be different than fifty millimeters.

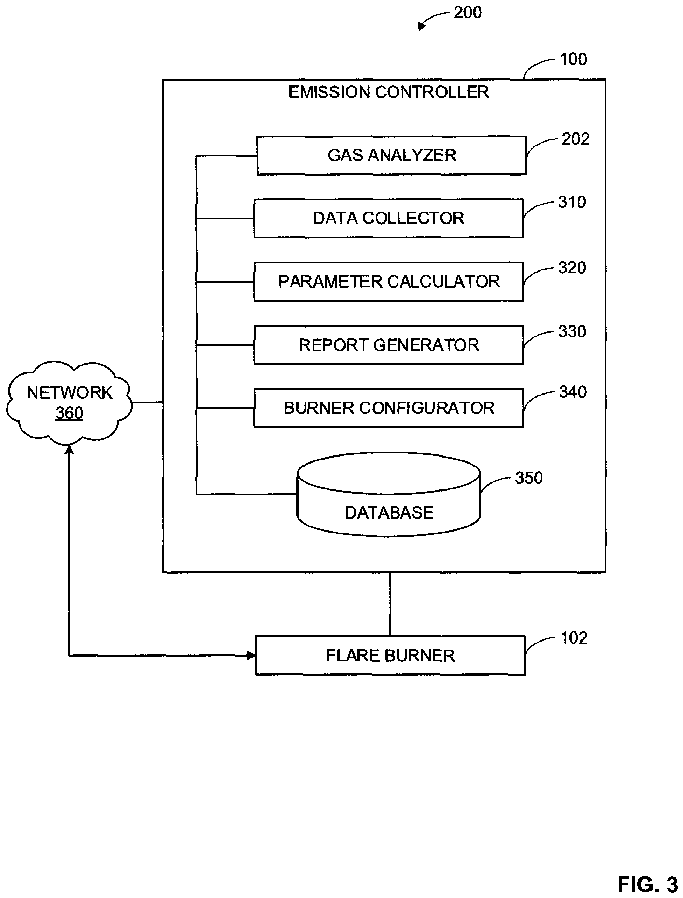

FIG. 3 is a block diagram of an example implementation of the example emission controller system 200 of FIG. 2 including the emission controller 100 of FIGS.

1-2. In FIG. 3, the emission controller system 200 includes the emission controller 100 to obtain samples of flare burner emissions and process emission data to modify a configuration of the flare burner 102 of FIG. 1 based on the processed emission data. In FIG. 2, the emission controller 100 includes the gas analyzer 202 of FIG. 2, an example data collector 310, an example parameter calculator 320, an example report generator 330, an example burner configurator 340, and an example database 350.

In FIG. 3, the emission controller 100 includes the gas analyzer 202 of FIG. 2 to obtain and process samples of the flue gas mixture 126. For example, the gas analyzer 202 can activate the vacuum pump 208 of FIG. 2 to enable the probes 130 of FIGS. 1-2 to obtain samples of the flue gas mixture 126. In some examples, the gas analyzer 202 processes the samples to determine concentrations of gas components of the flue gas mixture 126. For example, the gas analyzer 202 can calculate a volume concentration of an emission species with respect to and/or otherwise relative to a reference gas. For example, the gas analyzer 202 can calculate a volume concentration of CO, an NOx gas, etc., with respect to a reference gas such as $CO_2$ for the examples with known, measured, estimated, etc., carbon weight fraction and mass rate of hydrocarbon fluid.

In the illustrated example of FIG. 3, the emission controller 100 includes the data collector 310 to obtain emission data associated with the flue gas mixture 126 of FIGS. 1-2 and/or, more generally, an operation of the flare burner 102 of FIG. 1. For example, the data collector 310 can obtain emission data from the gas analyzer 202. As used herein, the terms "emission data" and "emission information" are used interchangeably and refer to data associated with the flue gas mixture 126 of FIGS. 1-2 and/or, more generally, associated with the flare burner 102 of FIGS. 1-2. For example, the emission data can include one or more concentrations of emission species or gas components, one or more flow rates of the emission species or gas components, etc. In other examples, the emission data can include fluid flow rates including a flow rate of the pressurized air source 106, the test fluid source 118, the hydrocarbon source 120, etc. In yet another example, the emission data can include information associated with a configuration of the flare burner 102 including an angle of inclination of the flare burner 102 or an operating condition of the flare burner 102 including an ambient temperature, a humidity level, etc., of the measurement environment 104.

In some examples, the data collector 310 obtains fluid source information. For example, the data collector 310 can obtain a carbon weight fraction, a density, a viscosity, etc., of the test fluid source 118 and/or the hydrocarbon source 120 of FIG. 1. In some examples, the data collector 310 obtains operating parameters, ambient conditions, and/or a burner configuration of the flare burner 102. For example, the data collector 310 can obtain an ambient temperature at which a sample was taken, an angle of inclination of the flare burner 102, a flow rate of the test fluid source 118 and/or the hydrocarbon source 120, etc. In some examples, the data collector 310 determines whether to perform another flare burner operation. For example, the data collector 310 can determine that additional emission data is desired or needed. The data collector 310 can instruct the burner configurator 340 to command the flare burner 102 to perform another flare burner operation to obtain the additional emission data.

In the illustrated example of FIG. 3, the emission controller 100 includes the parameter calculator 320 to calculate parameters associated with flare burner emissions including the flue gas mixture 126 of FIGS. 1-2. In some examples, the parameter calculator 320 determines parameters associated with the hydrocarbon source 120 of FIG. 1. For example, during combustion of the hydrocarbon source 120, carbon converts into $CO_2$, CO, unburned hydrocarbons $C_xH_y$, and soot (e.g., smoke). During a normal operation mode of the flare burner 102 (e.g., the flare burner 102 is not producing visible black smoke), the quantity of soot is negligible compared to $CO_2$, $C_xH_y$ and CO. In some examples, the parameter calculator 320 identifies and/or otherwise determines a reference gas to calculate parameters associated with the flue gas mixture 126. For example, the parameter calculator 320 can identify $CO_2$ as the reference gas based on the concentration of $CO_2$ in the flue gas mixture 126 being substantially more (e.g., a multiple of five higher, a multiple of ten higher, etc.) than other concentrations of components of the flue gas mixture 126.

In some examples, where composition of the hydrocarbon source 120 is known (e.g., crude oil with measured water cut and carbon weight content in hydrocarbon fraction), the parameter calculator 320 determines a mass flowrate of hydrocarbons $q_{HC}$ in kilograms per hour [kg/hr]. For example, the parameter calculator 320 can determine the mass flowrate based on measurements by the flowmeter 124. In other examples, the parameter calculator 320 can determine the mass flowrate based on a volume flowrate, a density, a water cut, etc., and/or a combination thereof of the hydrocarbon fluid of the hydrocarbon source 120. For example, if hydrocarbon-containing fluid supplied from the hydrocarbon source 120 is a crude dead oil with total volume flowrate $Q_{crude}$ in cubic meters per hour [$m^3$/hr], a corresponding water-cut WC is in percent [%] and oil density $\rho_{oil}$ is in kilograms per cubic meter [$kg/m^3$], then the parameter calculator 320 can generate a relation for the mass flowrate of hydrocarbons $q_{HC}$ in kilograms per hour [kg/hr] as described below in Equation (1):

$$q_{HC} = Q_{crude} \cdot \frac{WC}{100} \cdot \rho_{oil}$$

Equation (1)

In some examples, where composition of the hydrocarbon source 120 is known, the parameter calculator 320 determines a mass rate of carbon within the hydrocarbon fluid $q_C$ [kg/hr] that is fed to the flare burner 102 for combustion as described below in Equation (2):

$$q_C = q_{HC} \cdot \frac{m_c}{100}$$

Equation (2)

In the example of Equation (2) above, $m_c$ is the carbon weight fraction in percent [%] of the hydrocarbon fluid, which is known or measured (e.g. by chemical CHNS-elemental analysis of hydrocarbon sample or by other methods) or estimated. For example, the carbon weight fraction can vary in fairly narrow ranges for crude oil and natural gas. In such examples, the carbon weight fraction can vary in a first range of approximately 83-85% for crude oil, a second range of approximately 75-77% for natural gas, etc., and, thus, the carbon weight fraction can be estimated with high confidence that the carbon weight fraction is 84% +/-1% for crude oil, 76% +/- 1% for natural gas, etc. For example, the gas analyzer 202 can perform the elemental analysis of a sample of the hydrocarbon source 120. The carbon-containing combustion products (e.g., $CO_2$ and CO and unburned hydrocarbons $C_xH_y$ as methane) theoretical normalized total volumetric emission flow rate ($Q_{cccp}$) in normal cubic meters per hour [Nm³/hr] can be represented as described below in Equation (3):

$$Q_{cccp} = q_{HC} \cdot \frac{m_c}{100} \cdot \frac{V_{mol}}{Mw_C}$$

Equation (3)

The example of Equation (3) above can be represented as described below in Equation (4), where $V_{mol}$ = 0.024 [Nm³/mol] and $V_{mol}$ represents the molar volume of gas under normal conditions (e.g., ambient temperature of 20 °C and an absolute pressure of 1 atmosphere (atm)) and $Mw_C$ = 0.012 [kg/mol] and $Mw_C$ represents the atomic weight of carbon:

$$Q_{cccp} = 0.02 \, q_{HC} \cdot m_c$$

Equation (4)

In an example where composition of the combustible fluid source 120 is unknown, a non-combustible gas (e.g., a marker gas such as argon, helium, etc., which is not present in the combustible fluid source 120) is fed to the third supply line 119 with a fixed flow rate $Q_{ref}$ and used as a reference gas for the emissions measurements. In some examples, the non-combustible gas volumetric concentration in the flue gas mixture 126 is greater than the non-combustible gas volumetric concentration in the ambient air. Alternatively, other detectable concentration percentage ranges may be used. In such examples, the gas analyzer 202 can determine the concentrations of the emission gases of the flue gas mixture 126, including concentration of the marker gas. The parameter calculator 320 can calculate the volumetric flow rate of each emission gas based on the concentrations in the example where the composition of hydrocarbon source 120 is unknown.

In some examples, the parameter calculator 320 determines a volume concentration of a gas component of the flue gas mixture 126 with respect to and/or otherwise relative to a reference gas volume concentration. For example, the parameter calculator 320 can determine the volume concentration of CO with respect to a volume concentration of a reference gas such as $CO_2$ as described below in Equation (5):

$$c_{CO/CO2} = n_{CO}/n_{CO2}$$

Equation (5)

In the example of Equation (5) above, the parameter calculator 320 determines the volume concentration of CO with respect to the volume concentration of $CO_2$ ($c_{CO/CO2}$) by calculating a ratio of the CO volume concentration ($n_{CO}$) and the $CO_2$ volume concentration ($n_{CO2}$). For example, the gas analyzer 202 can determine $n_{CO}$ and $n_{CO2}$ by analyzing the samples of the flue gas mixture 126 and transmit values of $n_{CO}$ and $n_{CO2}$ to the parameter calculator 320 for processing. In the example of Equation (5), $n_{CO}$ and $n_{CO2}$ can be represented in parts per million (ppm) volume.

In some examples, the parameter calculator 320 measures emissions of unburned gaseous hydrocarbons ($C_xH_y$) by the flare burner 102 in $C_3H_8$-equivalent volume (molar) fraction units. For example, the parameter calculator 320 can measure a percent by volume of $C_xH_y$ to a reference gas such as $CO_2$ ($c_{CxHy/CO2}$) as described below in Equation (6):

$$c_{CxHy/CO2} = n_{CxHy}/n_{CO2}$$

Equation (6)

In some examples, where composition of the hydrocarbon source 120 is known, the parameter calculator 320 determines $CO_2$ as a reference gas and evaluates a $CO_2$ normalized volumetric emission flow rate ($Q_{CO2}$) by assuming that a fraction of carbon atoms released from the flame plume 114 of FIG. 1 as soot emissions is negligible (e.g., assuming high-efficiency smokeless flaring of the flare burner 102). Thus, the normalized volumetric flowrate of carbon-containing combustion products $Q_{cccp}$ is a sum of $CO_2$, CO, and $C_xH_y$ (as methane equivalent) normalized volumetric flowrates. Therefore, for example, the parameter calculator 320 can determine the $CO_2$ normalized volumetric emission flow rate (which acts as $Q_{ref}$ in such examples) as described below in Equation (6):

$$Q_{CO2} = \frac{Q_{cccp}}{1 + c_{CO/CO2} + 3 \cdot c_{CxHy/CO2}}$$

Equation (7)

The example of Equation (7) above, considering the example of Equation (4) above, can be expressed as mass emission flow rate of $CO_2$ ($q_{CO2}$), by analogy to Equation (3), as described below in Equation (8) when the molecular weight of $CO_2$ ($Mw_{CO2}$) is 0.044 kg/mol.

$$q_{CO2} = \frac{0.037 \, q_{HC} \cdot m_c}{1 + c_{CO/CO2} + 3 \cdot c_{CxHy/CO2}}$$

Equation (8)

Alternatively, if soot emissions from the flare burner 102 are significant, the examples of Equation (7) and Equation (8) above can provide an upper bound for $CO_2$ normalized volumetric and mass emission flow rates.

In some examples, the parameter calculator 320 determines a CO mass emission flow rate ($q_{CO}$) as described below in Equation (9):

$$q_{CO} = Q_{CO2} \cdot c_{CO/CO2} \cdot \frac{Mw_{CO}}{V_{mol}}$$

Equation (9)

The example of Equation (9) above can be expressed as described below in Equation (10), considering the examples of Equation (4) and Equation (7) above, when the molecular weight of CO ($Mw_{CO}$) is 0.028 kg/mol.

$$q_{CO} = \frac{0.023 \, q_{HC} \cdot m_c \cdot c_{CO/CO2}}{1 + c_{CO/CO2} + 3 \cdot c_{CxHy/CO2}}$$

Equation (10)

In some examples, the parameter calculator 320 determines a volume concentration of a nitrogen oxides gas component of the flue gas mixture 126 with respect to a reference gas volume concentration such as $CO_2$ as described below in Equation (11):

$$c_{NOx/CO2} = n_{NOx}/n_{CO2}$$

Equation (11)

In the example of Equation (11) above, the parameter calculator 320 determines the volume concentration of the nitrogen oxides (NOx) gas component with respect to the volume concentration of $CO_2$ ($c_{NOx/CO2}$) by calculating a ratio of the NOx volume concentration ($n_{NOx}$) and the $CO_2$ volume concentration ($n_{CO2}$). For example, the gas analyzer 202 can determine $n_{NOx}$ and $n_{CO2}$ by analyzing the samples of the flue gas mixture 126 and transmit values of $n_{NOx}$ and $n_{CO2}$ to the parameter calculator 320 for processing. In the example of Equation (11) above, $n_{NOx}$ and $n_{CO2}$ can be represented in ppm volume.

In response to calculating the volume concentration of NOx with respect to $CO_2$, the parameter calculator 320 can determine a nitrogen oxides mass emission flow rate ($q_{NOx}$) as described below in Equation (12):

$$q_{NOx} = Q_{CO2} \cdot c_{NOx/CO2} \cdot \frac{Mw_{NOx}}{V_{mol}}$$

Equation (12)

The example of Equation (12) above can be expressed as described below in Equation (13), considering the examples of Equation (4) and Equation (7) and considering that all NOx will be finally oxidized to $NO_2$ at atmospheric daylight conditions and NOx ($Mw_{NOx}$) having a molecular weight of 0.046 kg/mol.

$$q_{NOx} = \frac{0.038 \, q_{HC} \cdot m_c \cdot c_{NOx/CO2}}{1 + c_{CO/CO2} + 3 \cdot c_{CxHy/CO2}}$$

Equation (13)

In response to calculating $c_{CxHy/CO2}$, the parameter calculator 320 can determine an unburned gaseous hydrocarbons mass emission flow rate ($q_{cxHy}$) (e.g., in (kg/hr)) as described below in Equation (14):

$$q_{CxHy} = Q_{CO2} \cdot c_{CxHy/CO2} \cdot \frac{Mw_{CxHy}}{V_{mol}}$$

Equation (14)

The example of Equation (14) above can be expressed as described below in Equation (15), considering the examples of Equation (4) and Equation (7) above, when the unburned gaseous hydrocarbons mainly include propane ($C_3H_8$) and has a molecular weight ($Mw_{CxHy}$) of 0.0441 kg/mol.

$$q_{CxHy} = \frac{0.037 \, q_{HC} \cdot m_c \cdot c_{CxHy/CO2}}{1 + c_{CO/CO2} + 3 \cdot c_{CxHy/CO2}}$$

Equation (15)

In some examples, the parameter calculator 320 determines whether one or more calculated emission flow rates satisfy a target emission restriction or an emission flow rate threshold. For example, the parameter calculator 320 can compare a CO flow rate of 150 $Nm^3$/hr to an emission flow rate threshold of 200 $Nm^3$/hr and determine that the CO flow rate satisfies the emission flow rate threshold based on the comparison. For example, the parameter calculator 320 can determine that the CO flow rate of 150 $Nm^3$/hr satisfies the emission flow rate threshold of 200 $Nm^3$/hr based on the CO flow rate being less than the emission flow rate threshold. In other examples, the parameter calculator 320 can determine that a CO flow rate of 500 $Nm^3$/hr does not satisfy the emission flow rate threshold of 200 $Nm^3$/hr based on the CO flow rate being greater than the emission flow rate. For example, in response to the CO flow rate not satisfying the emission flow rate threshold, the parameter calculator 320 can determine that the configuration of the flare burner 102 generates more gas emissions than the target emission restriction required for a waste-burning operation of the hydrocarbon source 120 of FIG. 1.

In some examples, each emission gas is compared to the same threshold. For example, the parameter calculator 320 can compare a CO flow rate of 150 $Nm^3$/hr, a NOx flow rate of 10 $Nm^3$/hr, and a $SO_2$ flow rate of 5

$Nm^3$/hr to an emission flow rate threshold of 100 $Nm^3$/hr and determine that the CO flow rate does not satisfy the emission flow rate threshold based on the comparison because the CO flow rate of 150 $Nm^3$/hr is greater than the emission flow rate threshold of 100 $Nm^3$/hr. In some examples, each emission gas is compared to a corresponding respective threshold. For example, the parameter calculator 320 can compare a CO flow rate of 150 $Nm^3$/hr to a first emission flow rate threshold of 200 $Nm^3$/hr, a NOx flow rate of 20 $Nm^3$/hr to a second emission flow rate threshold of 10 $Nm^3$/hr, etc. In such examples, the parameter calculator 320 can compare the flow rates of the emission gases of CO and NOx to their respective threshold. Accordingly, the parameter calculator 320 can determine that the CO flow rate satisfies the first emission flow rate threshold because the CO flow rate of 150 $Nm^3$/hr is less than the first emission flow rate threshold of 200 $Nm^3$/hr and the NOx flow rate does not satisfy the second emission flow rate threshold because the NOx flow rate of 20 $Nm^3$/hr is greater than the second emission flow rate threshold of 10 $Nm^3$/hr.

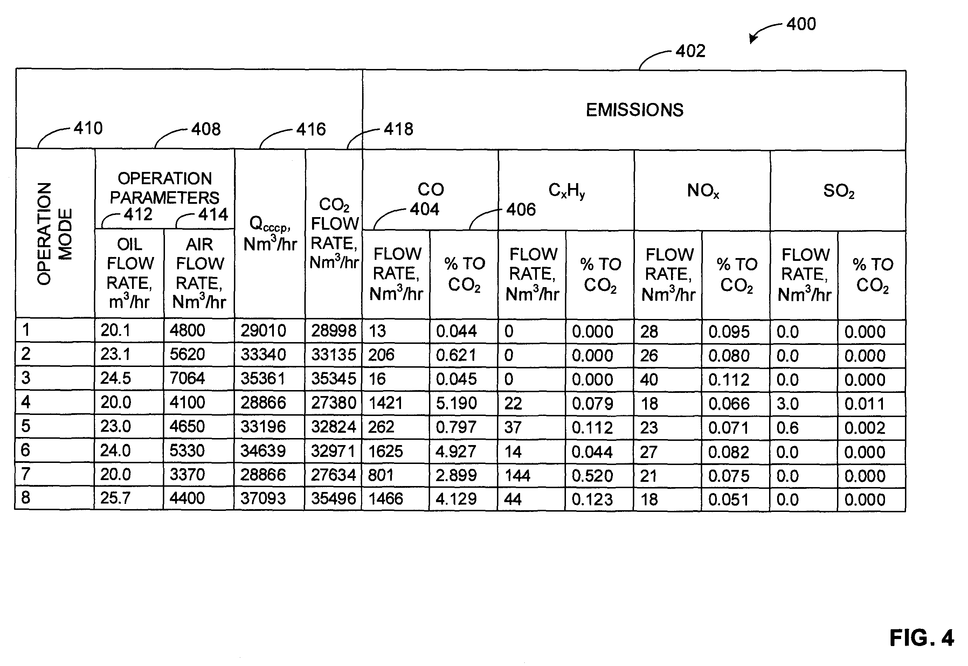

In the illustrated example of FIG. 3, the emission controller 100 includes the report generator 330 to generate a report or a log associated with an operation of the flare burner 102. In some examples, the report generator 330 generates a report including gas concentrations of each gas component of the flue gas mixture 126, a flow rate corresponding to each gas component, a volume percentage with respect to a reference gas corresponding to each gas component, etc., and/or a combination thereof. In some examples, the report generator 330 includes an example table 400 or portions of the example table 400 as depicted in FIG. 4.

In some examples, the report generator 330 generates an alert indicating that an operation mode of the flare burner 102 is a non-compliant mode or a non-compliant operation mode. For example, in response to determining that a flow rate of an emission gas does not satisfy an emission flow rate threshold, the report generator 330 can generate an alert indicating that a configuration of the flare burner 102 that generated the flow rate of the emission gas is a non-compliant operation mode. In some examples, the report generator 330 generates an alert indicating that an operation mode of the flare burner 102 is a compliant mode or a compliant operation mode. For example, in response to determining that a flow rate of an emission gas satisfies the emission flow rate threshold, the report generator 330 can generate an alert indicating that a configuration of the flare burner 102 that generated the flow rate of the emission gas is a compliant operation mode.

In some examples, the report generator 330 generates a recommendation to adjust and/or otherwise modify the flare burner 102 of FIG. 1 based on a gas concentration of a gas component, a flow rate of the gas component, a volume percentage of the gas component, etc., associated with an operation of the flare burner 102. For example, the report generator 330 can generate a recommendation to adjust a flow rate of one or more of the pressurized air source 106, the test fluid source 118, the hydrocarbon source 120, etc., of FIG. 1. In other examples, the report generator 330 can generate a recommendation to adjust an angle of inclination of the flare burner 102.

In the illustrated example of FIG. 3, the emission controller 100 includes the burner configurator 340 to adjust a configuration or a parameter of the flare burner 102. In some examples, the burner configurator 340 adjusts a configuration of the flare burner 102 based on a recommendation generated by the report generator 330. For example, the burner configurator 340 can adjust a flow rate of one or more of the pressurized air source 106, the test fluid source 118, the hydrocarbon source 120, etc., of FIG. 1 based on the recommendation generated by the report generator 330. In other examples, the burner configurator 340 can adjust an angle of inclination associated with the flare burner 102 based on the recommendation prepared by the report generator 330.

In some examples, the burner configurator 340 operates the flare burner 102. For example, the burner configurator 340 can direct the flare burner 102 to operate using pressurized air from the pressurized air source 106 of FIG. 1. For example, the burner configurator 340 can flush out the flare burner 102 by using the pressurized air source 106. In other examples, the burner configurator 340 can instruct the flare burner 102 to operate using fluid from the test fluid source 118 when the hydrocarbon source 120 is a gas. In other examples, the burner configurator 340 can operate the flare burner 102 by using the test fluid source 118 and/or the hydrocarbon source 120 of FIG. 1. For example, the burner configurator 340 can instruct the flare burner 102 to perform a continuous mode operation by burning fluid from the test fluid source 118 and/or the hydrocarbon source 120.

In the illustrated example of FIG. 3, the emission controller 100 includes the database 350 to record data (e.g., gas concentrations, flow rates, volume percentages, etc.). The database 350 can be implemented by a volatile memory (e.g., a Synchronous Dynamic Random Access Memory (SDRAM), Dynamic Random Access Memory (DRAM), RAMBUS Dynamic Random Access Memory (RDRAM), etc.) and/or a non-volatile memory (e.g., flash memory). The database 350 can additionally or alternatively be implemented by one or more double data rate (DDR) memories, such as DDR, DDR2, DDR3, mobile DDR (mDDR), etc. The database 350 can additionally or alternatively be implemented by one or more mass storage devices such as hard disk drive(s), compact disk drive(s) digital versatile disk drive(s), etc. While in the illustrated example the database 350 is illustrated as a single database, the database 350 can be implemented by any number and/or type(s) of databases. Furthermore, the data stored in the database 350 can be in any data format such as, for example, binary data, comma delimited data, tab delimited data, structured query language (SQL) structures, etc.

In the emission controller system 200 of FIG. 3, the emission controller 100 and the flare burner 102 are communicatively coupled to an example network 360. The network 360 of the illustrated example of FIG. 3 is the Internet. However, the network 360 can be implemented using any suitable wired and/or wireless network(s) including, for example, one or more data buses, one or more Local Area Networks (LANs), one or more wireless LANs, one or more cellular networks, one or more private networks, one or more public networks, etc. In some examples, the network 360 enables the emission controller 100 to be in communication with the flare burner 102 and/or an external computing device coupled to the network 360. For example, the emission controller 100 can obtain information (e.g., a configuration of the flare burner 102, a parameter of the flare burner 102, etc.) from the flare burner 102 via the network 360.

In some examples, the network 360 enables the emission controller 100 to communicate with an external computing device (e.g., a database, a server, etc.) to store the information obtained by the emission controller 100. In such examples, the network 360 enables the emission controller 100 to retrieve and/or otherwise obtain the stored information for processing. In some examples, the network 360 is a cloud-based network, which can perform cloud-based data storage, analytics, big data analysis, deep machine learning, etc., to enable multi-well, multi-field flare burning-scale modeling, digital oilfield high-efficiency operations and automation, oil-gas well testing management and/or optimization based on information obtained and/or processed by the emission controller 100. The emission controller 100 can be an Internet of Things (IoT) device enabled to facilitate capturing, communicating, analyzing, and acting on data generated by networked objects and machines. A plurality of emission controllers 100 of FIG. 3 can additionally or alternatively be deployed via the network 360 to monitor a plurality of the flare burners 102.

While an example manner of implementing the emission controller 100 of FIGS. 1-2 is illustrated in FIG. 3, one or more of the elements, processes, and/or devices illustrated in FIG. 3 may be combined, divided, rearranged, omitted, eliminated, and/or implemented in any other way. Further, the example gas analyzer 210, the example data collector 310, the example parameter calculator 320, the example report generator 330, the example burner configurator 340, the example database 350, and/or, more generally, the example emission controller 100 of FIG. 3 may be implemented by hardware, software, firmware, and/or any combination of hardware, software, and/or firmware. Thus, for example, any of the example gas analyzer 210, the example data collector 310, the example parameter calculator 320, the example report generator 330, the example burner configurator 340, the example database 350, and/or, more generally, the example emission controller 100 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)), and/or field programmable logic device(s) (FPLD(s)). When reading any of the apparatus or system claims of this patent to cover a purely software and/or firmware implementation, at least one of the example gas analyzer 210, the example data collector 310, the example parameter calculator 320, the example report generator 330, the example burner configurator 340, and/or the example database 350 is/are hereby expressly defined to include a non-transitory computer readable storage device or storage disk such as a memory, a digital versatile disk (DVD), a compact disk (CD), a Blu-ray disk, etc., including the software and/or firmware. Further still, the example emission controller 100 of FIGS. 1-2 may include one or more elements, processes, and/or devices in addition to, or instead of, those illustrated in FIG. 3, and/or may include more than one of any or all of the illustrated elements, processes, and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

FIG. 4 illustrates the table 400 depicting example emission parameters determined by the emission controller 100 of FIGS. 1-3. In FIG. 4, the table 400 includes emission parameters 402 corresponding to gas components of the flue gas mixture 126 of FIG. 1 including CO, $C_xH_y$, NOx, and $SO_2$. Each gas component includes an emission parameter of flow rate 404 and volume percentage to reference gas (% to $CO_2$) 406 which, in this example, identifies $CO_2$ as the reference gas.

In the illustrated example of FIG. 4, the table 400 includes operation parameters 408 associated with each operation mode 410 of the flare burner 102 including (1) an oil flow rate 412 corresponding to the second flowmeter 124 of FIG. 1 measuring a flow rate of fluid in the second supply line 122 and (2) an air flow rate 414 corresponding to the first flowmeter 116 of FIG. 1 measuring a flow rate of air in the first supply line 112. In FIG. 4, the operation mode 410 corresponds to a configuration of the flare burner 102. For example, a first configuration of the flare burner 102 can correspond to operation mode 1 and a second configuration of the flare burner 102 can correspond to operation mode 2 where the first and the second configurations are different. For example, the first configuration can have a first angle of inclination of the flare burner 102 and the second configuration can have a second angle of inclination of the flare burner 102 where the first and the second angles of inclination are different.

In FIG. 4, the emission controller 100 calculates the normalized volumetric emission flow rate ($Q_{cccp}$) of carbon-containing combustion products 416 denoted by "$Q_{cccp}$ $Nm^3/hr$". For example, the emission controller 100 can calculate $Q_{cccp}$ by using the examples of Equations (3) and/or (4) as described above. In FIG. 4, the emission controller 100 calculates the normalized volumetric emission flow rate of $CO_2$ 418 emitted by the flare burner 102 of FIG. 1 by using the examples of Equations (4) and/or (7) as described above. In FIG. 4, the emission controller 100 calculates the volume percentages 406 by using the examples of Equations (5), (6), and/or (11) as described above. In FIG. 4, the emission controller 100 calculates the flow rates 404 by using the examples of Equations (10), (13), and/or (15) as described above.

In the table 400 of FIG. 4, the emission controller 100 calculates the flow rates 404 and the volume percentages 406 for a plurality of emission gases associated with the flue gas mixture 126 of FIG. 1 for a plurality of operation modes 410 of the flare burner 102. In FIG. 4, the emission controller 100 can determine whether the operation mode 410 of the flare burner 102 satisfies a target emission restriction or an emission flow rate threshold. For example, the emission controller 100 can compare the flow rate 404 of each operation mode 410 to a target emission restriction of 300 $Nm^3/hr$ and determine whether the operation mode 410 satisfies the target emission restriction. For example, based on the table 400, the emission controller 100 can determine that operation modes 4, 6, 7, and 8 do not satisfy the target emission restriction based on the flow rates being greater than the target emission restriction of 300 $Nm^3/hr$. Based on the table 400 of FIG. 4, the emission controller 100 can determine that operation modes 1, 2, 3, and 5 satisfy the target emission restriction based on the flow rates being less than the target emission restriction of 300 $Nm^3/hr$.

Alternatively, the emission controller 100 may compare the volume percentage 406 to a volume percentage threshold or a target volume percentage restriction and determine that one of the operation modes does not satisfy the volume percentage threshold. For example, the emission controller 100 can compare the volume percentage 406 of each operation mode 410 to a target volume percentage restriction of 1.5% and determine whether the operation mode 410 satisfies the target volume percentage restriction. For example, based on the table 400, the emission controller 100 can determine that operation modes 4, 6, 7, and 8 do not satisfy the target volume percentage restriction based on the respective ones of the volume percentage 406 being greater than the target volume percentage restriction of 1.5%. Based on the table 400 of FIG. 4, the emission controller 100 can determine that operation modes 1, 2, 3, and 5 satisfy the target volume percentage restriction based on the respective ones of the volume percentage 406 being less than the target volume percentage restriction of 1.5%. In response to determining that an operation mode does not satisfy the target emission restriction, the target volume percentage restriction, etc., and/or a combination thereof, the emission controller 100 can generate a recommendation, a report, etc., to adjust and/or otherwise optimize a configuration and/or an operational parameter of the flare burner 102 to satisfy one or both restrictions.

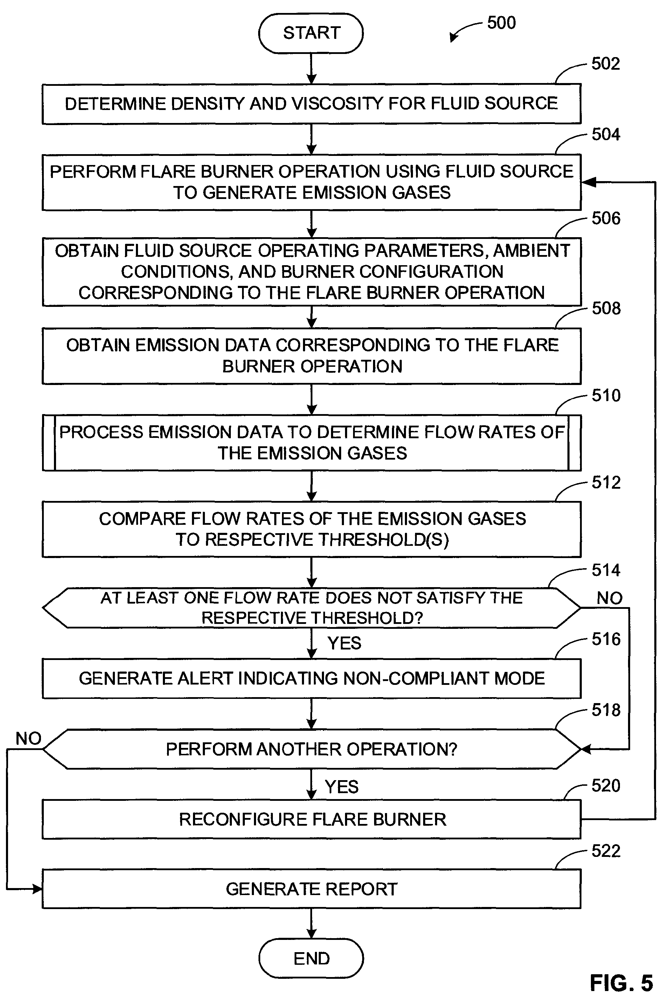

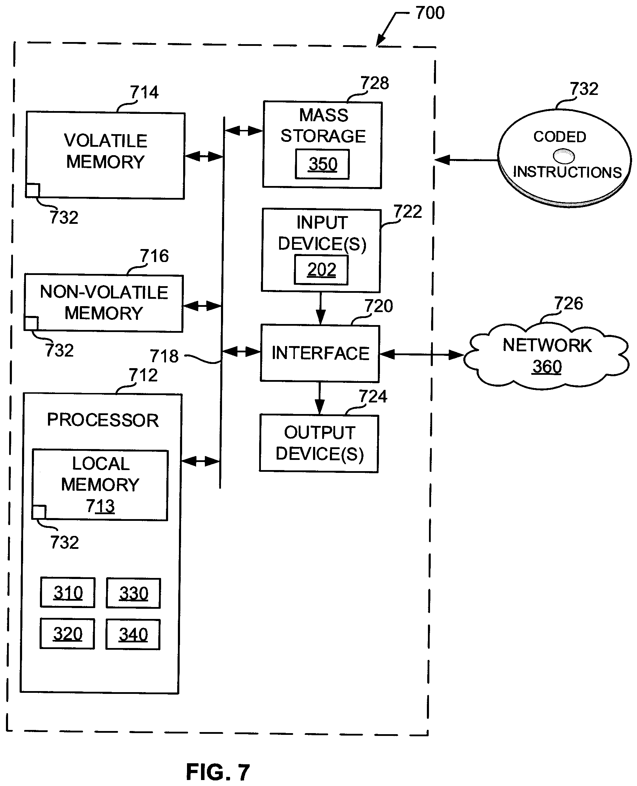

Flowcharts representative of example hardware logic, machine readable instructions, hardware implemented state machines, and/or any combination thereof for implementing the emission controller 100 of FIGS. 1-3 is shown in FIGS. 5-6. The machine readable instructions may be an executable program or portion of an executable program for execution by a computer processor such as the processor 712 shown in the example processor platform 700 discussed below in connection with FIG. 7. The program may be embodied in software stored on a non-transitory computer readable storage medium such as a CD-ROM, a floppy disk, a hard drive, a DVD, a Blu-ray disk, or a memory associated with the processor 712, but the entire program and/or parts thereof could alternatively be executed by a device other than the processor 712 and/or embodied in firmware or dedicated hardware. Further, although the example program is described with reference to the flowcharts illustrated in FIGS. 5-6, many other methods of implementing the example emission controller 100 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware.

As mentioned above, the example processes of FIGS. 5-6 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory, and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation.

As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

FIG. 5 is a flowchart representative of example machine readable instructions 500 that can be executed to implement the emission controller 100 of FIGS. 1-3 to configure a flare burner to perform a waste-burning operation based on emission data. The machine readable instructions 500 begin at block 502, at which the emission controller 100 determines a density and a viscosity for a fluid source. For example, the data collector 310 of FIG. 1 can obtain a density and a viscosity of the hydrocarbon source 120 of FIG. 1.

At block 504, the emission controller 100 performs a flare burner operation using the fluid source to generate emission gases. For example, the burner configurator 340 can instruct the flare burner 102 to obtain and combust the test fluid source 118, the hydrocarbon source 120, etc., and/or a combination thereof to generate the flame plume 114 and the corresponding flue gas mixture 126 of FIG. 1. For example, the flare burner 102 can generate the flue gas mixture 126 including CO, $CO_2$, NOx, $SO_2$, etc.

At block 506, the emission controller 100 obtains fluid source operating parameters, ambient conditions, and burner configuration corresponding to the flare burner operation. For example, the data collector 310 can obtain a flow rate of fluid in the first supply line 112 from the pressurized air source 106 (e.g., the air flow rate 414 of FIG. 4), a flow rate of fluid in the second supply line 122 from the hydrocarbon source 120 (e.g., the oil flow rate 412 of FIG. 4), etc., and/or a combination thereof.

At block 508, the emission controller 100 obtains emission data corresponding to the flare burner operation. For example, the data collector 310 can obtain samples of the flue gas mixture 126 and process the samples using the gas analyzer 202 to determine emission data including concentrations of gas components of the flue gas mixture 126.

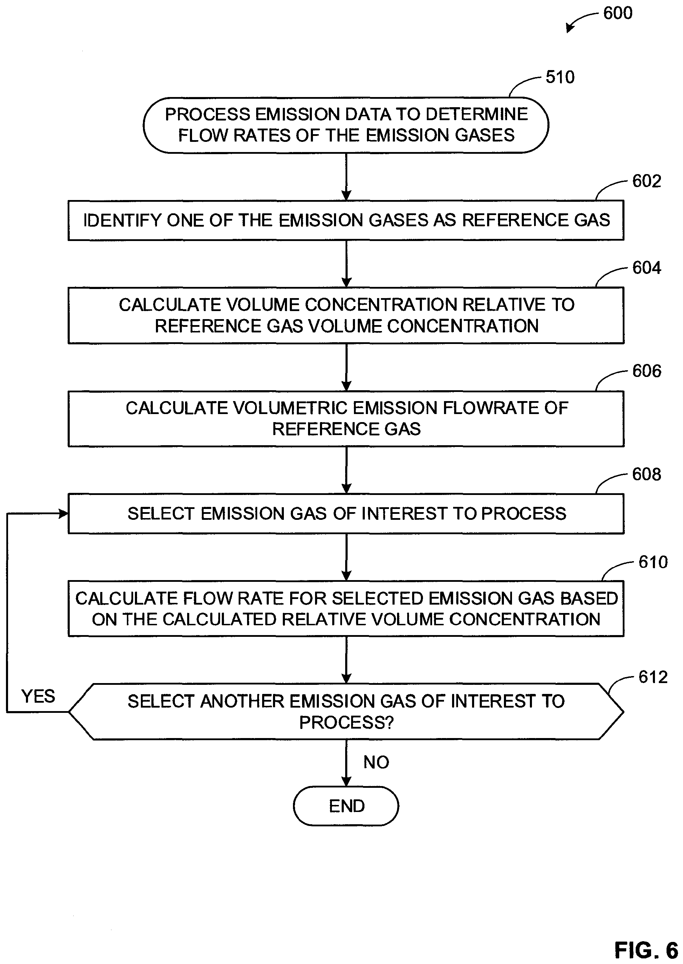

At block 510, the emission controller 100 processes the emission data to determine flow rates of the emission gases. For example, the parameter calculator 320 can calculate a flow rate of CO, $CO_2$, NOx, $SO_2$, etc., included in the flue gas mixture 126. An example process that can be used to implement block 510 is described below in connection with FIG. 6.

At block 512, the emission controller 100 compares flow rates of the emission gases to respective threshold(s). For example, the parameter calculator 320 can compare a CO flow rate of 1421 $Nm^3/hr$ corresponding to operation mode 4 of the table 400 of FIG. 4 to an emission flow rate threshold of 300 $Nm^3/hr$.

At block 514, the emission controller 100 determines whether at least one flow rate does not satisfy the respective threshold. For example, the parameter calculator 320 can determine that the CO flow rate of 1421 $Nm^3/hr$ corresponding to operation mode 4 does not satisfy the emission flow rate threshold of 300 $Nm^3/hr$ based on the CO flow rate being greater than the emission flow rate threshold.

If, at block 514, the emission controller 100 determines that all the flow rates satisfy the respective threshold, control proceeds to block 518 to determine whether to perform another operation. If, at block 514, the emission controller 100 determines that at least one flow rate does not satisfy the respective threshold, then, at block 516, the emission controller 100 generates an alert indicating a non-compliant mode. For example, the report generator 330 can generate an alert indicating that a configuration of the flare burner 102 associated with operation mode 4 of the table 400 fails the emission flow rate threshold and, thus, operation mode 4 is a non-compliant mode. In such examples, the report generator 330 can generate an alert indicating that the configuration associated with operation mode 4 should not be used for a waste-burning operation of the hydrocarbon source 120 of FIG. 1.

At block 518, the emission controller 100 determines whether to perform another operation. For example, the data collector 310 can determine whether to perform another flare burner operation associated with another mode of the flare burner 102. For example, the data collector 310 can determine to perform another operation of the flare burner 102 with a configuration associated with operation mode 5 of the table 400 of FIG. 4.

If, at block 518, the emission controller 100 determines not to perform another operation, control proceeds to block 522 to generate a report. For example, the report generator 330 can generate a report including one or more emission flow rates, one or more emission gas concentrations, one or more volume percentages, a table in accordance with the table 400 of FIG. 4, etc., and/or a combination thereof corresponding to one or more operation modes of the flare burner 102 of FIG. 1. In response to generating the report, the machine readable instructions 500 of FIG. 5 conclude.

If, at block 518, the emission controller 100 determines to perform another operation, then, at block 520, the emission controller 100 reconfigures the flare burner. For example, the burner configurator 340 can instruct and/or otherwise cause an adjustment of the flare burner 102 to another configuration and/or an operational parameter associated with a different operation mode. In response to reconfiguring the flare burner, control returns to block 504 to perform a flare burner operation using the fluid source to generate emission gases with the adjusted configuration and/or adjusted operating parameter (e.g. a different flow rate of (1) air from the pressurized air source 106 of FIG. 1 and/or (2) hydrocarbon fluid from the hydrocarbon source 120 of FIG. 1).

FIG. 6 is a flowchart representative of example machine readable instructions 600 that can be executed to implement the emission controller 100 of FIGS. 1-3 to process emission data to determine flow rates of the emission gases. The machine readable instructions 600 can be used to implement block 510 of the machine readable instructions 500 of FIG. 5. The machine readable instructions 600 of FIG. 6 begin at block 602, at which the emission controller 100 identifies one of the emission gases as a reference gas. For example, in response to composition of the hydrocarbon source 120 of FIG. 1 being unknown, the parameter calculator 320 can identify an emission gas corresponding to the test fluid source 118 of FIG. 1 as the reference gas. In other examples, in response to the composition of the hydrocarbon source 120 being known, the parameter calculator 320 can identify $CO_2$ as the reference gas.

At block 604, the emission controller 100 calculates a volume concentration relative to a reference gas volume concentration. For example, the parameter calculator 320 can calculate the volume concentration of CO with respect to a volume concentration of the reference gas of $CO_2$ as described above in the example of Equation (5).

At block 606, the emission controller 100 calculates a volumetric emission flow rate of the reference gas. For example, the parameter calculator 320 can determine a normalized volumetric flow emission rate ($Q_{ref}$) based on measurement data obtained from the third flowmeter 117. In other examples, the parameter calculator 320 can determine the normalized volumetric flow emission rate by using (1) the examples of Equations (1), (4) and/or (7) as described above and (2) measurement data from the second flowmeter 124. The normalized volumetric flow emission rate can correspond to a flow of fluid of the test fluid source 118 and/or the hydrocarbon source 120 of FIG. 1 supplied to the flare burner 102.

At block 608, the emission controller 100 selects an emission gas of interest to process. For example, the parameter calculator 320 can select CO or another emission gas included in the table 400 of FIG. 4 to process.

At block 610, the emission controller 100 calculates a flow rate for the selected emission gas based on the calculated relative volume concentration. For example, the parameter calculator 320 can calculate the CO flow rate based on the volume concentration of CO with respect to the volume concentration of $CO_2$ as described above in the examples of Equation (9) and/or (10).

At block 612, the emission controller 100 determines whether to select another emission gas of interest to process. For example, the parameter calculator 320 can determine to select NOx, $SO_2$, etc., to process. If, at block 612, the emission controller 100 determines to select another emission gas of interest to process, control returns to block 608 to select another emission gas of interest to process. If, at block 612, the emission controller 100 determines not to select another emission gas of interest to process, the machine readable instructions 600 of FIG. 6 return to block 512 of the example machine readable instructions 500 of FIG. 5 to compare the flow rates of the emission gases to the threshold.

FIG. 7 is a block diagram of an example processor platform 700 structured to execute the instructions of FIGS. 5-6 to implement the emission controller 100 of FIGS. 1-3. The processor platform 700 can be, for example, a server, a personal computer, a workstation, a self-learning machine (e.g., a neural network), a mobile device (e.g., a cell phone, a smart phone, a tablet such as an iPad™), a personal digital assistant (PDA), or any other type of computing device.

The processor platform 700 of the illustrated example includes a processor 712. The processor 712 of the illustrated example is hardware. For example, the processor 712 can be implemented by one or more integrated circuits, logic circuits, microprocessors, GPUs, DSPs, or controllers from any desired family or manufacturer. The hardware processor may be a semiconductor based (e.g., silicon based) device. In this example, the processor 712 implements the example data collector 310, the example parameter calculator 320, the example report generator 330, and the example burner configurator 340 of FIG. 3.

The processor 712 of the illustrated example includes a local memory 713 (e.g., a cache). The processor 712 of the illustrated example is in communication with a main memory including a volatile memory 714 and a non-volatile memory 716 via a bus 718. The volatile memory 714 may be implemented by Synchronous Dynamic Random Access Memory (SDRAM), Dynamic Random Access Memory (DRAM), RAMBUS® Dynamic Random Access Memory (RDRAM®), and/or any other type of random access memory device. The non-volatile memory 716 may be implemented by flash memory and/or any other desired type of memory device. Access to the main memory 714, 716 is controlled by a memory controller.

The processor platform 700 of the illustrated example also includes an interface circuit 720. The interface circuit 720 may be implemented by any type of interface standard, such as an Ethernet interface, a universal serial bus (USB), a Bluetooth® interface, a near field communication (NFC) interface, and/or a PCI express interface.

In the illustrated example, one or more input devices 722 are connected to the interface circuit 720. The input device(s) 722 permit(s) a user to enter data and/or commands into the processor 712. The input device(s) 722 can be implemented by, for example, an audio sensor, a microphone, a camera (still or video), a keyboard, a button, a mouse, a touchscreen, a track-pad, a trackball, an isopoint device, and/or a voice recognition system. In this example, the input device(s) 722 implement the example gas analyzer 202 of FIGS. 2-3. Additionally or alternatively, the gas analyzer 202 may be implemented by the processor 712.

One or more output devices 724 are also connected to the interface circuit 720 of the illustrated example. The output devices 724 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer, and/or speaker. The interface circuit 720 of the illustrated example, thus, typically includes a graphics driver card, a graphics driver chip, and/or a graphics driver processor.

The interface circuit 720 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 726. The communication can be via, for example, an Ethernet connection, a digital subscriber line (DSL) connection, a telephone line connection, a coaxial cable system, a satellite system, a line-of-site wireless system, a cellular telephone system, etc. In this example, the network 726 implements the network 360 of FIG. 3.

The processor platform 700 of the illustrated example also includes one or more mass storage devices 728 for storing software and/or data. Examples of such mass storage devices 728 include floppy disk drives, hard drive disks, compact disk drives, Blu-ray disk drives, redundant array of independent disks (RAID) systems, and digital versatile disk (DVD) drives. In this example, the one or more mass storage devices 728 implement the database 350 of FIG. 3.

The machine executable instructions 732 of FIGS. 5-6 may be stored in the mass storage device 728, in the volatile memory 714, in the non-volatile memory 716, and/or on a removable non-transitory computer readable storage medium such as a CD or DVD.

From the foregoing, it will be appreciated that example systems, methods, apparatus, and articles of manufacture have been disclosed that improve measuring of flare burner emissions. Examples disclosed herein improve measuring of flare burner emissions installing a plurality of gas intake probes to obtain gas samples of a flue gas mixture proximate a flare burner exhaust plume. Examples disclosed herein determine concentrations of gas species included in the gas mixture based on identifying a reference gas with a known chemical composition and/or known flow rate. Examples disclosed herein calculate gas emission parameters including emission gas flow rates and emission gas volumes with respect to the reference gas volume. Examples disclosed herein determine gas emission parameters for one or more operation modes of the flare burner and can identify compliant operation modes in accordance with one or more thresholds such as a target emission restriction and/or a target volume percentage restriction. Examples disclosed herein can reduce pollution associated with a waste-burning operation by determining an operation mode of the flare burner in accordance with the one or more thresholds and configuring the flare burner to the operation mode.

In the specification and appended claims: the terms "connect," "connection," "connected," "in connection with," and "connecting" are used to mean "in direct connection with" or "in connection with via one or more elements;" and the term "set" is used to mean "one element" or "more than one element." Further, the terms "couple," "coupling," "coupled," "coupled together," and "coupled with" are used to mean "directly coupled together" or "coupled together via one or more elements." As used herein, the terms "up" and "down," "upper" and "lower," "upwardly" and downwardly," "upstream" and "downstream;" "above" and "below;" and other like terms indicating relative positions above or below a given point or element are used in this description to more clearly describe some embodiments of the disclosure.

The foregoing outlines features of several embodiments of the invention so that those skilled in the art may better understand aspects of the present invention as it is defined in the appended claims.

**Claims**

1. An apparatus, comprising:

> a data collector (310) configured to obtain emission data corresponding to an emission gas generated by a flare burner (102);
> a parameter calculator (320) configured to:
>
>> calculate a flow rate of the emission gas based on a reference gas; and
>> determine whether the flow rate satisfies a threshold; and

> a burner configurator (340) configured to:
>
>> adjust at least one of a configuration or an operational parameter of the flare burner (102) when the flow rate does not satisfy the threshold; and
>> operate the flare burner (102) with at least one of the adjusted configuration or the operational parameter.

2. The apparatus of claim 1, further including a gas analyzer (202) to obtain the emission data.

3. The apparatus of claim 1, wherein a sample of the emission gas is obtained by a probe (130) proximate a flue gas mixture generated by the flare burner (102).

4. The apparatus of claim 1, wherein the flow rate is a first flow rate, and the data collector (310) is configured to:

> obtain a carbon weight content of a hydrocarbon source (120) provided to the flare burner (102); and
> obtain a second flow rate corresponding to the hydrocarbon source (120) measured by a flowmeter (124).

5. The apparatus of claim 4, wherein the parameter calculator (320) is configured to:

> calculate a concentration of the emission gas relative to the reference gas;
> calculate a normalized volumetric emission flow rate of a reference carbon dioxide gas corresponding to the hydrocarbon source (120) based on the carbon weight content and the second flow rate; and
> calculate the first flow rate based on the normalized volumetric emission flow rate of the reference carbon dioxide gas and the concentration of the emission gas relative to the reference gas.

6. The apparatus of claim 1, wherein the parameter calculator (320) is configured to:

> calculate a ratio of a first volume of the emission gas with respect to a second volume of the reference gas;
> determine whether the ratio satisfies a target volume percentage restriction; and
> determine an operation mode of the flare burner (102) as a non-compliant operation mode when the ratio does not satisfy the target volume percentage restriction.

7. A method, comprising:

obtaining emission data corresponding to an emission gas generated by a flare burner (102);

calculating (510) a flow rate of the emission gas based on a reference gas;

determining (512) whether the flow rate satisfies a threshold;

in response to the flow rate not satisfying the threshold (514), adjusting at least one of a configuration or an operational parameter of the flare burner (102); and

operating (520) the flare burner (102) with at least one of the adjusted configuration or operational parameter.

8. The method of claim 7, wherein a gas analyzer (202) obtains the emission data.

9. The method of claim 7, wherein a sample of the emission gas is obtained by a probe (130) proximate a flue gas mixture (126) generated by the flare burner (102).

10. The method of claim 7, wherein the flow rate is a first flow rate, and further including:

obtaining a carbon weight content of a hydrocarbon source (120) provided to the flare burner (102); and

obtaining a second flow rate corresponding to the hydrocarbon source (120) measured by a flowmeter (126).

11. The method of claim 10, further including:

calculating (604) a concentration of the emission gas relative to the reference gas;

calculating (606) a normalized volumetric emission flow rate of a reference carbon dioxide gas corresponding to the hydrocarbon source (120) based on the carbon weight content and the second flow rate; and

calculating (610) the first flow rate based on the normalized volumetric emission flow rate of the reference carbon dioxide gas and the concentration of the emission gas relative to the reference gas.

12. The method of claim 7, further including:

calculating a ratio of a first volume of the emission gas with respect to a second volume of the reference gas;

determining whether the ratio satisfies a target volume percentage restriction; and

in response to the ratio not satisfying the target volume percentage restriction, determining an operation mode of the flare burner (102) as a non-compliant operation.

13. The method of claim 7, further including generating (522) a report including a recommendation to configure the flare burner (102) using at least one of the adjusted configuration or the operational parameter.

14. A non-transitory computer readable storage medium comprising instructions which, when executed, cause an apparatus according to any of claims 1 to 6 to perform the method of any of claims 7 to 13.

**Patentansprüche**

1. Einrichtung, umfassend:

einen Datensammler (310), der dazu konfiguriert ist, Emissionsdaten zu erhalten, die einem von einem Fackelbrennner (102) erzeugten Emissionsgas entsprechen;
einen Parameterrechner (320), der konfiguriert ist zum:

Berechnen einer Strömungsgeschwindigkeit des Emissionsgases basierend auf einem Referenzgas; und
Bestimmen, ob die Strömungsgeschwindigkeit einen Schwellenwert erfüllt; und
einen Brennerkonfigurator (340), der konfiguriert ist zum:

Anpassen von mindestens einem von einer Konfiguration oder einem Betriebsparameter des Fackelbrennners (102), wenn die Strömungsgeschwindigkeit den Schwellenwert nicht erfüllt; und
Betreiben des Fackelbrenners (102) mit mindestens einem von der angepassten Konfiguration oder dem angepassten Betriebsparameter.

2. Einrichtung nach Anspruch 1, ferner einschließend einen Gasanalysator (202) zum Erhalten der Emissionsdaten.

3. Einrichtung nach Anspruch 1, wobei eine Probe des Emissionsgases durch eine Sonde (130) in der Nähe eines Rauchgasgemisches, das durch den Fackelbrenner (102) erzeugt wird, erhalten wird.

4. Einrichtung nach Anspruch 1, wobei die Strömungsgeschwindigkeit eine erste Strömungsgeschwindigkeit ist, und der Datensammler (310) konfiguriert ist zum:

Erhalten eines Kohlenstoffgewichtsgehalts einer Kohlenwasserstoffquelle (120), die dem Fackelbrenner (102) bereitgestellt wird; und

Erhalten einer zweiten Strömungsgeschwindigkeit entsprechend der Kohlenwasserstoffquelle (120), die von einem Durchflussmesser (124) gemessen wird.

5. Einrichtung nach Anspruch 4, wobei der Parameterrechner (320) konfiguriert ist zum:

   Berechnen einer Konzentration des Emissionsgases relativ zu dem Referenzgas;
   Berechnen einer normalisierten volumetrischen Emissionsströmungsgeschwindigkeit eines Referenz-Kohlendioxidgases entsprechend der Kohlenwasserstoffquelle (120) basierend auf dem Kohlenstoffgewichtsgehalt und der zweiten Strömungsgeschwindigkeit; und
   Berechnen der ersten Strömungsgeschwindigkeit basierend auf der normalisierten volumetrischen Emissionsströmungsgeschwindigkeit des Referenz-Kohlendioxidgases und der Konzentration des Emissionsgases relativ zu dem Referenzgas.

6. Einrichtung nach Anspruch 1, wobei der Parameterrechner (320) konfiguriert ist zum:

   Berechnen eines Verhältnisses eines ersten Volumens des Emissionsgases in Bezug auf ein zweites Volumen des Referenzgases;
   Bestimmen, ob das Verhältnis eine Zielvolumenprozentbeschränkung erfüllt; und
   Bestimmen eines Betriebsmodus des Fackelbrenners (102) als nicht konformer Betriebsmodus, wenn das Verhältnis die Zielvolumenprozentbeschränkung nicht erfüllt.

7. Verfahren, umfassend:

   Erhalten von Emissionsdaten, die einem von einem Fackelbrennner (102) erzeugten Emissionsgas entsprechen;
   Berechnen (510) einer Strömungsgeschwindigkeit des Emissionsgases basierend auf einem Referenzgas;
   Bestimmen (512), ob die Strömungsgeschwindigkeit einen Schwellenwert erfüllt;
   als Reaktion darauf, dass die Strömungsgeschwindigkeit den Schwellenwert nicht erfüllt (514), Anpassen mindestens eines von einer Konfiguration oder einem Betriebsparameter des Fackelbrennens (102); und
   Betreiben (520) des Fackelbrenners (102) mit mindestens einem von der angepassten Konfiguration oder dem angepassten Betriebsparameter.

8. Verfahren nach Anspruch 7, wobei ein Gasanalysator (202) die Emissionsdaten erhält.

9. Verfahren nach Anspruch 7, wobei eine Probe des Emissionsgases durch eine Sonde (130) in der Nähe eines Rauchgasgemisches (126), das durch den Fackelbrenner (102) erzeugt wird, erhalten wird.

10. Verfahren nach Anspruch 7, wobei die Strömungsgeschwindigkeit eine erste Strömungsgeschwindigkeit ist, und ferner einschließend:

    Erhalten eines Kohlenstoffgewichtsgehalts einer Kohlenwasserstoffquelle (120), die dem Fackelbrenner (102) bereitgestellt wird; und
    Erhalten einer zweiten Strömungsgeschwindigkeit entsprechend der Kohlenwasserstoffquelle (120), die von einem Durchflussmesser (126) gemessen wird.

11. Verfahren nach Anspruch 10, ferner einschließend:

    Berechnen (604) einer Konzentration des Emissionsgases relativ zu dem Referenzgas;
    Berechnen (606) einer normalisierten volumetrischen Emissionsströmungsgeschwindigkeit eines Referenz-Kohlendioxidgases entsprechend der Kohlenwasserstoffquelle (120) basierend auf dem Kohlenstoffgewichtsgehalt und der zweiten Strömungsgeschwindigkeit; und
    Berechnen (610) der ersten Strömungsgeschwindigkeit basierend auf der normalisierten volumetrischen Emissionsströmungsgeschwindigkeit des Referenz-Kohlendioxidgases und der Konzentration des Emissionsgases relativ zu dem Referenzgas.

12. Verfahren nach Anspruch 7, ferner einschließend:

    Berechnen eines Verhältnisses eines ersten Volumens des Emissionsgases in Bezug auf ein zweites Volumen des Referenzgases;
    Bestimmen, ob das Verhältnis eine Zielvolumenprozentbeschränkung erfüllt; und
    als Reaktion auf das Verhältnis, das die Zielvolumeprozentbeschränkung nicht erfüllt, Bestimmen eines Betriebsmodus des Fackelbrenners (102) als nichtkonformer Betrieb.

13. Verfahren nach Anspruch 7, ferner einschließend das Erzeugen (522) eines Berichts, der eine Empfehlung zum Konfigurieren des Fackelbrennners (102) unter Verwendung mindestens eines von der angepassten Konfiguration oder dem angepassten Betriebsparameter einschließt.

14. Nichtflüchtiges, computerlesbares Speichermedium, das Anweisungen umfasst, die, wenn sie ausgeführt werden, eine Einrichtung nach einem der Ansprüche 1 bis 6 veranlassen, das Verfahren nach einem der Ansprüche 7 bis 13 durchzuführen.

## Revendications

1. Appareil, comprenant :

   un collecteur de données (310) configuré pour obtenir des données d'émission correspondant à un gaz d'émission généré par un brûleur de torche (102) ;
   un calculateur de paramètres (320) configuré pour :

      calculer un débit du gaz d'émission en fonction d'un gaz de référence ; et
      déterminer si le débit satisfait à un seuil ; et
   un configurateur de brûleur (340) configuré pour :

      régler au moins l'un parmi une configuration ou un paramètre de fonctionnement du brûleur de torche (102) lorsque le débit ne satisfait pas au seuil ; et
      faire fonctionner le brûleur de torche (102) selon au moins l'un parmi la configuration réglée ou le paramètre de fonctionnement.

2. Appareil selon la revendication 1, comportant en outre un analyseur de gaz (202) permettant d'obtenir les données d'émission.

3. Appareil selon la revendication 1, dans lequel un échantillon du gaz d'émission est obtenu par une sonde (130) à proximité d'un mélange de gaz de combustion généré par le brûleur de torche (102).

4. Appareil selon la revendication 1, dans lequel le débit est un premier débit, et le collecteur de données (310) est configuré pour :

   obtenir une teneur pondérale en carbone d'une source d'hydrocarbures (120) fournie au brûleur de torche (102) ; et
   obtenir un second débit correspondant à la source d'hydrocarbures (120) mesuré par un débitmètre (124).

5. Appareil selon la revendication 4, dans lequel le calculateur de paramètres (320) est configuré pour :

   calculer une concentration du gaz d'émission par rapport au gaz de référence ;
   calculer un débit d'émission volumétrique normalisé d'un gaz de dioxyde de carbone de référence correspondant à la source d'hydrocarbures (120) en fonction de la teneur pondérale en carbone et du second débit ; et
   calculer le premier débit en fonction du débit d'émission volumétrique normalisé du gaz de dioxyde de carbone de référence et de la concentration du gaz d'émission par rapport au gaz de référence.

6. Appareil selon la revendication 1, dans lequel le calculateur de paramètres (320) est configuré pour :

   calculer un rapport entre un premier volume du gaz d'émission et un second volume du gaz de référence ;
   déterminer si le rapport satisfait à une restriction en pourcentage de volume cible ; et
   déterminer un mode de fonctionnement du brûleur de torche (102) comme mode de fonctionnement non conforme lorsque le rapport ne satisfait pas à la restriction en pourcentage de volume cible.

7. Procédé, comprenant :

   l'obtention de données d'émission correspondant à un gaz d'émission généré par un brûleur de torche (102) ;
   le calcul (510) d'un débit du gaz d'émission en fonction d'un gaz de référence ;
   la détermination (512) du fait de savoir si le débit satisfait à un seuil ;
   en réponse au débit ne satisfaisant pas au seuil (514), le réglage d'au moins l'un parmi une configuration ou un paramètre de fonctionnement du brûleur de torche (102) ; et
   le fait de faire fonctionner (520) le brûleur de torche (102) selon au moins l'un parmi la configuration réglée ou le paramètre de fonctionnement.

8. Procédé selon la revendication 7, dans lequel un analyseur de gaz (202) obtient les données d'émission.

9. Procédé selon la revendication 7, dans lequel un échantillon du gaz d'émission est obtenu par une sonde (130) à proximité d'un mélange de gaz de combustion (126) généré par le brûleur de torche (102).

10. Procédé selon la revendication 7, dans lequel le débit est un premier débit, et comportant en outre :

   l'obtention d'une teneur pondérale en carbone d'une source d'hydrocarbures (120) fournie au brûleur de torche (102) ; et
   l'obtention d'un second débit correspondant à la source d'hydrocarbures (120) mesuré par un débitmètre (126).

11. Procédé selon la revendication 10, comportant en outre :

le calcul (604) d'une concentration du gaz d'émission par rapport au gaz de référence ;
le calcul (606) d'un débit d'émission volumétrique normalisé d'un gaz de dioxyde de carbone de référence correspondant à la source d'hydrocarbures (120) en fonction de la teneur pondérale en carbone et du second débit ; et
le calcul (610) du premier débit en fonction du débit d'émission volumétrique normalisé du gaz de dioxyde de carbone de référence et de la concentration du gaz d'émission par rapport au gaz de référence.

12. Procédé selon la revendication 7, comportant en outre :

le calcul d'un rapport entre un premier volume du gaz d'émission et un second volume du gaz de référence ;
la détermination du fait de savoir si le rapport satisfait à une restriction en pourcentage de volume cible ; et
en réponse au fait que le rapport ne satisfait pas à la restriction en pourcentage de volume cible, la détermination d'un mode de fonctionnement du brûleur de torche (102) comme un fonctionnement non conforme.

13. Procédé selon la revendication 7, comportant en outre la génération (522) d'un rapport comportant une recommandation pour configurer le brûleur de torche (102) à l'aide d'au moins l'un parmi la configuration réglée ou le paramètre de fonctionnement.

14. Support de stockage non transitoire lisible par ordinateur comprenant des instructions qui, lorsqu'elles sont exécutées, amènent un appareil selon l'une quelconque des revendications 1 à 6 à effectuer le procédé selon l'une quelconque des revendications 7 à 13.

FIG. 1

EP 4 038 318 B1

**FIG. 2**

EP 4 038 318 B1

FIG. 3

EP 4 038 318 B1

| OPERATION MODE | OPERATION PARAMETERS | | $Q_{cccp}$, Nm³/hr | $CO_2$ FLOW RATE, Nm³/hr | EMISSIONS | | | | | | | |
|---|---|---|---|---|---|---|---|---|---|---|---|---|
| | | | | | CO | | $C_xH_y$ | | $NO_x$ | | $SO_2$ | |
| | OIL FLOW RATE, m³/hr | AIR FLOW RATE, Nm³/hr | | | FLOW RATE, Nm³/hr | % TO $CO_2$ | FLOW RATE, Nm³/hr | % TO $CO_2$ | FLOW RATE, Nm³/hr | % TO $CO_2$ | FLOW RATE, Nm³/hr | % TO $CO_2$ |
| 1 | 20.1 | 4800 | 29010 | 28998 | 13 | 0.044 | 0 | 0.000 | 28 | 0.095 | 0.0 | 0.000 |
| 2 | 23.1 | 5620 | 33340 | 33135 | 206 | 0.621 | 0 | 0.000 | 26 | 0.080 | 0.0 | 0.000 |
| 3 | 24.5 | 7064 | 35361 | 35345 | 16 | 0.045 | 0 | 0.000 | 40 | 0.112 | 0.0 | 0.000 |
| 4 | 20.0 | 4100 | 28866 | 27380 | 1421 | 5.190 | 22 | 0.079 | 18 | 0.066 | 3.0 | 0.011 |
| 5 | 23.0 | 4650 | 33196 | 32824 | 262 | 0.797 | 37 | 0.112 | 23 | 0.071 | 0.6 | 0.002 |
| 6 | 24.0 | 5330 | 34639 | 32971 | 1625 | 4.927 | 14 | 0.044 | 27 | 0.082 | 0.0 | 0.000 |
| 7 | 20.0 | 3370 | 28866 | 27634 | 801 | 2.899 | 144 | 0.520 | 21 | 0.075 | 0.0 | 0.000 |
| 8 | 25.7 | 4400 | 37093 | 35496 | 1466 | 4.129 | 44 | 0.123 | 18 | 0.051 | 0.0 | 0.000 |

**FIG. 4**

START

500

DETERMINE DENSITY AND VISCOSITY FOR FLUID SOURCE

502

PERFORM FLARE BURNER OPERATION USING FLUID SOURCE TO GENERATE EMISSION GASES

504

OBTAIN FLUID SOURCE OPERATING PARAMETERS, AMBIENT CONDITIONS, AND BURNER CONFIGURATION CORRESPONDING TO THE FLARE BURNER OPERATION

506

OBTAIN EMISSION DATA CORRESPONDING TO THE FLARE BURNER OPERATION

508

PROCESS EMISSION DATA TO DETERMINE FLOW RATES OF THE EMISSION GASES

510

COMPARE FLOW RATES OF THE EMISSION GASES TO RESPECTIVE THRESHOLD(S)

512

AT LEAST ONE FLOW RATE DOES NOT SATISFY THE RESPECTIVE THRESHOLD?          NO

514

YES

GENERATE ALERT INDICATING NON-COMPLIANT MODE

516

NO          PERFORM ANOTHER OPERATION?

518

YES

RECONFIGURE FLARE BURNER

520

GENERATE REPORT

522

END

**FIG. 5**

600

510

PROCESS EMISSION DATA TO DETERMINE
FLOW RATES OF THE EMISSION GASES

602

IDENTIFY ONE OF THE EMISSION GASES AS REFERENCE GAS

604

CALCULATE VOLUME CONCENTRATION RELATIVE TO
REFERENCE GAS VOLUME CONCENTRATION

606

CALCULATE VOLUMETRIC EMISSION FLOWRATE OF
REFERENCE GAS

608

SELECT EMISSION GAS OF INTEREST TO PROCESS

610

CALCULATE FLOW RATE FOR SELECTED EMISSION GAS BASED
ON THE CALCULATED RELATIVE VOLUME CONCENTRATION

612

YES

SELECT ANOTHER EMISSION GAS OF INTEREST TO
PROCESS?

NO

END

FIG. 6

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017058832 A
- US 2015167972 A